# EUROPEAN PATENT APPLICATION

(11) **EP 4 848 889 A1**
(43) Date of publication of application: **02.12.2026**
(21) Application number: 26179128.9
(22) Date of filing: 18.05.2026
(51) Int. Cl.: H04W 84/12, H04W 24/02, H04W 36/06, H04W 40/16, H04W 72/27, H04W 88/08

(54) **CHANNEL SWITCHING FOR WIRELESS NETWORK**

(30) Priority: 26.05.2025 US 202519218549
(71) Applicant: TP-Link Systems Inc., Irvine, California 92618 (US)
(72) Inventor: Shen, Dong, Chengdu, 610213 (CN); Kuang, Zheng, Chengdu, 610213 (CN)
(74) Representative: Marks & Clerk LLP

(57) **Abstract**

A method for wireless communication implemented at a first communication device, the method including: performing a channel switching decision for a wireless network with a plurality of communication devices operating on the same operating channel according to environment conditions and/or topology change of the wireless network, wherein the plurality of communication devices includes the first communication device; and in response to a target channel being selected in the channel switching decision according to the environment conditions and topology of the wireless network, switching the operating channel of the wireless network to the target channel within a switching execution period.

## Description

### CROSS REFERENCE TO RELATED APPLICATIONS

This application claims the benefit of U.S. Non-Provisional Patent Application No. 19/218,549, filed on May 26, 2025 and titled "CHANNEL SWITCHING FOR WIRELESS NETWORK".

### TECHNICAL FIELD

The present disclosure relates to wireless communication, and in particular, to access point (AP) devices, methods, systems and computer program products for switching an operating channel for a wireless network.

### BACKGROUND

802.11 wireless technology has been widely applied in homes and enterprises, allowing users to conveniently access the Internet through these wireless local area networks (LANs). However, in such network applications, the access point (AP) must be connected to an existing wired network to provide network access services for wireless users. To expand wireless coverage, it is necessary to use cables, switches, power supplies, and other equipment to interconnect APs. Traditionally, connecting APs to the wired network results in high deployment costs and requires a significant amount of time for large-area wireless coverage. In contrast, by connecting two or more independent wired or wireless LANs via wireless links, it forms an interconnected network for data access, such as wireless bridged network and wireless mesh network, and can facilitate the quick and convenient construction of wireless LANs in complex environments, resulting in more convenient network deployment and installation, and flexible networking.

In wireless bridged network, a primary AP is networked with at least one secondary AP and the primary and secondary APs are operating on the same channel in working mode. During operation, the environment and topology of the bridged network may change dynamically, which may result in the deteriorated overall network performance (such as decreased throughput, increased latency, higher packet error rate, etc.), decreased connection stability and so on of the wireless bridge. Likewise, in a mesh network, the environment and topology of the mesh network may change dynamically, and thus similar problems exist.

### SUMMARY

In view of the above problems, the present disclosure provides an access point (AP) device, method, system, and computer program product for switching an operating channel for a wireless network.

In accordance with one embodiment of the present disclosure, there is provided a communication device. The communication device may be a first communication device, which comprises one or more processors; a memory coupled to at least one of the one or more processors; and a set of computer program instructions stored in the memory. When executed by at least one of the one or more processors, the set of computer program instructions may cause the first communication device to perform the following operations: performing a channel switching decision for a wireless network with a plurality of communication devices operating on the same operating channel according to environment conditions and/or topology change of the wireless network, wherein the plurality of communication devices includes the first communication device; and in response to a target channel being selected in the channel switching decision according to the environment conditions and topology of the wireless network, switching the operating channel of the wireless network to the target channel within a switching execution period.

In accordance with a further embodiment of the present disclosure, there is provided a method for wireless communication implemented at a communication device, which is a first communication device. The method may comprise performing a channel switching decision for a wireless network with a plurality of communication devices operating on the same operating channel according to environment conditions and/or topology change of the wireless network, wherein the plurality of communication devices includes the first communication device; and in response to a target channel being selected in the channel switching decision according to the environment conditions and topology of the wireless network, switching the operating channel of the wireless network to the target channel within a switching execution period.

In accordance with another embodiment of the present disclosure, there is provided a computer program product for wireless communication. The computer program product may comprise a non-transitory computer readable storage medium having program instructions embodied therewith. The program instructions are executable by a processor of a communication device, which is a first communication device, to cause the first communication device to perform a channel switching decision for a wireless network with a plurality of communication devices operating on the same operating channel according to environment conditions and/or topology change of the wireless network, wherein the plurality of communication devices includes the first communication device; and in response to a target channel being selected in the channel switching decision according to the environment conditions and topology of the wireless network, switch the operating channel of the wireless network to the target channel within a switching execution period.

In accordance with another embodiment of the present disclosure, there is provided a wireless communication system comprising a first communication device and at least one second communication device. The at least one second communication device may be configured to, in response to meeting at least one information synchronization criteria, transmit, to the first communication device, the information related to the at least one second communication device. The first communication device may be configured to perform the following operations: performing a channel switching decision for a wireless network with a plurality of communication devices operating on the same operating channel according to environment conditions and/or topology change of the wireless network, wherein the plurality of communication devices includes the first communication device; and in response to a target channel being selected in the channel switching decision according to the environment conditions and topology of the wireless network, switching the operating channel of the wireless network to the target channel within a switching execution period.

In accordance with the embodiments of the present disclosure, a channel switching mechanism for a wireless network can be realized by means of performing a channel switching decision according to environment conditions and/or topology change of the wireless network and switching to a selected target channel at specific timing.

### BRIEF DESCRIPTION OF THE DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps, or elements.
FIG. 1a-1b illustrate two exemplary topologies that allow communication between two or more nodes in a wireless communication network;
FIG. 2 shows a schematic diagram illustrating an overall architecture of a channel switching mechanism for a wireless network in accordance with an embodiment of the present disclosure;
FIG. 3 illustrates a flowchart of an exemplary method 300 for wireless communication implemented at a primary communication device in accordance with an embodiment of the present disclosure;
FIG. 4 illustrates a flowchart of an exemplary process 400 for synchronizing information between a primary communication device and a secondary communication device at process 210 in FIG. 2 in accordance with an embodiment of the present disclosure;
FIG. 5 shows a flowchart illustrating an exemplary process 500 for determining channel switching and a target operating channel at process 220 in FIG. 2 in accordance with some embodiments of the present disclosure;
FIG. 6 shows a flowchart illustrating an exemplary process 600 for executing channel switching at step 230 in FIG. 2 in accordance with an embodiment of the present disclosure; and
FIG. 7 is an exemplary block diagram illustrating a computing device in accordance with some embodiments of the present disclosure.

One skilled in the art will appreciate that elements in the figures are illustrated for simplicity and clarity and have not necessarily been depicted to scale. For example, the dimensions of some of the elements in the illustrations, block diagrams or flowcharts may be exaggerated in respect to other elements to help an accurate understanding of the present embodiments.

### DETAILED DESCRIPTION

The following detailed description refers to the accompanying drawings. While several illustrative embodiments are described herein, modifications, adaptations and other implementations are possible. For example, substitutions, additions, or modifications may be made to the components and steps illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope of the invention is defined by the appended claims.

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "determining", "switching", "calculating", "updating", "selecting", "performing", "excluding", "receiving", "transmitting" or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner. Likewise, articles such as "a", "an" or "the" do not represent a quantity limit, but represent an existence of at least one. Words such as "connect" and "link" are not limited to physical or mechanical connections, but may include electrical connections, whether direct or indirect.

In addition, technical features involved in different embodiments of the present disclosure described below may be combined with each other as long as no conflicts occurs therebetween.

In the present disclosure, an access point (AP), which may be interchangeably referred to as a wireless access point (WAP), is a communication device that can communicate with a non-AP device (e.g., a station (STA) or client device) in a Local Area Network (LAN) and/or Wireless Local Area Network (WLAN) and that allows the non-AP to connect to a wired network. The AP usually connects to a router (via a wired network) as a standalone device, but it can also be integrated with or employed in the router. Likewise, in the present disclosure, a non-AP (e.g., a client device or station, which is interchangeably referred to as a STA) is a communication device that can communicate with an AP to obtain various communication services such as voice, video, packet data, messaging, broadcast, etc. The STA can be any device that contains an IEEE 820.11-conformant media access control (MAC) and physical layer (PHY) interface to the wireless medium (WM). For example, a STA may be a laptop, a desktop personal computer (PC), a personal digital assistant (PDA), an access point or a Wi-Fi phone in a WLAN environment. The STA may be fixed or mobile. In the WLAN environment, the terms "STA", "client device", "wireless client", "user" and "user device" are often used interchangeably.

In the present disclosure, a STA in a WLAN may work as an AP at a different occasion, and vice versa. This is because communication devices in the context of IEEE 802.11 (Wi-Fi) technologies may include both STA hardware components and AP hardware components. In this manner, the communication devices may switch between a STA mode and an AP mode, based on actual WLAN conditions and/or requirements. In various embodiments below, a non-AP STA may refer to a STA in a WLAN that is not implemented as an AP.

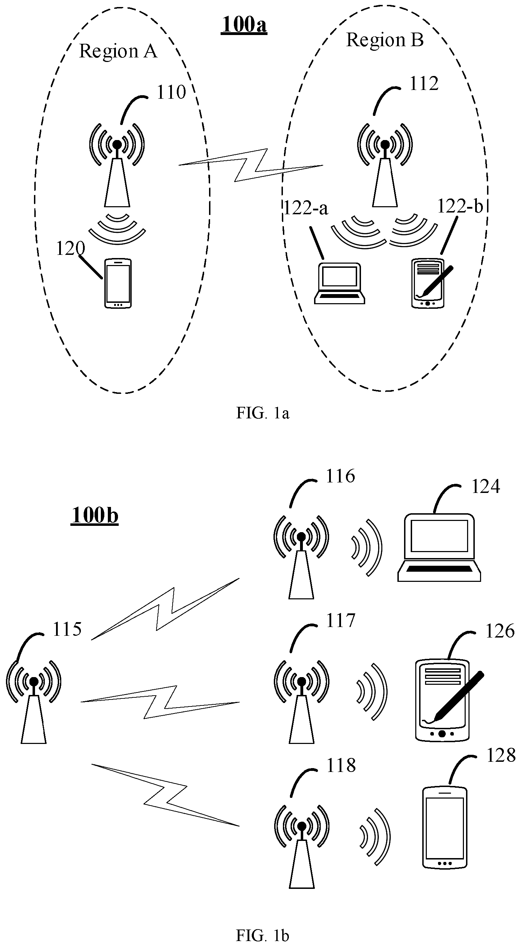

FIGS. 1a-1b illustrate two exemplary topologies that allow communication between two or more nodes in a wireless communication network. These examples are not meant to limit the scope of the invention and are merely illustrative. There are numerous possible topologies using any number and type of AP devices and associated networks (and nodes). Additionally, each node of a particular network may be at a fixed location or mobile.

FIG. 1a illustrates a point-to-point (P2P) network topology of the wireless communication network 100a including two AP devices 110 and 112. The AP device 110 is coupled to the AP device 112, and they transfer data therebetween. The AP device 110 has a traffic coverage of region A and enables a client device 120 in region A to connect to a wired network, while the AP device 112 has a traffic coverage of region B and enables client device 122-a and 122-b in region B to connect to the wired network. The wireless communication network 100a actually bridges two networks having different coverages. Any of the two AP devices may operate as a primary AP while the other may operate as a secondary AP. The quantity of AP devices and the quantity of client devices in FIG. 1a are merely an example. Multiple AP devices in the WLAN network can serve specific sets of associated client devices, and depending on application requirements and overall network constraints, the number of client devices in each serving set can be more than one or two client devices as depicted.

It should be noted that FIG. 1a shows that the client devices (e.g., 120, 122-a and 122-b) are in wireless connection with the AP devices (e.g., 110 and 112) for illustration purpose, some client devices may be in wired connection with the AP devices. Moreover, in FIG. 1a, region A and region B do not overlap with each other; however, those skilled in the art should appreciate that the two regions could partially overlap, or completely overlap (for example, one region is a portion of another region, or the two regions match perfectly).

FIG. 1b illustrates a point-to-multi-point (P2MP) network topology of the wireless communication network 100b including multiple AP devices 115-118. The AP device 115 is coupled to the AP devices 116-118, respectively, and operates as a primary AP, while the AP devices 116-118 operate as secondary APs. The AP device 116 enables a client device 124 to connect to the wired network, the AP device 117 enables a client device 126 to connect to the wired network, the AP device 118 enables a client device 128 to connect to the wired network. The wireless communication network 100b achieves interconnection of multiple networks by bridging the AP device 115 to the AP devices 116-118; however, the AP devices 116-118 can transfer data via only the AP device 115. In P2MP network topology, the primary AP (e.g., 115) may also associate with client devices.

As previously discussed, the AP device is capable of establishing LAN/WLAN communication with the client device, enabling the client device to connect to the wired network. This permits the client device to access a variety of communication services from the Internet, including voice, video, packet data, messaging, and broadcast, among others. The client device in embodiments of the present disclosure may have a wireless transceiver function, may support the 802.11 series protocols, and may communicate with the AP device or another client device. The client device is any user communication device that allows a user to communicate with an AP and then communicate with a WLAN. For example, the client device may be user equipment that can be connected to a network, including but not limited to, for example, a smartphone, a tablet computer, a desktop computer, a laptop computer, a notebook computer, an ultra-mobile personal computer, a handheld computer, a netbook, a personal digital assistant, and other internet-capable devices, may be an internet of things node in the internet of things, or may be a vehicle-mounted communication apparatus in the internet of vehicles. The AP device in embodiments of this application is an apparatus that serves the client device, and may support the 802.11 series protocols. For example, the AP device may be a communication entity such as a communication server, a router, a switch, or a bridge, or the AP device may include various forms of macro base stations, micro base stations, relay stations, and the like. Certainly, the AP device may alternatively be chips and processing systems in the various forms of devices, to implement the method and the function in embodiments of the present disclosure.

For existing bridge products, after the primary AP is networked with the first secondary AP by bridging and determines the operating channel, the operating channel would not automatically change (automatically switch) except for manually modifying the operating channel by the user and automatic channel switching to comply with regulations. The automatic channel switching carried out to comply with regulations mentioned above includes, but is not limited to, the current operating channel is a Dynamic Frequency Selection (DFS) channel, and a radar signal is detected on the current operating channel. According to regulations, the radar signal has the highest priority. Therefore, in order to avoid communication interference from the bridge to the radar signal, the bridge needs to change the operating channel.

The target channel to which the existing bridge products switch after detecting radar signals on the DFS operating channel is either a randomly selected channel or a pre-set fixed channel. Owing to the fact that the models and country codes of multiple APs participating in bridged networking may not be the same, there may be differences in the channels supported by different APs participating in bridged networking. It can be seen that existing bridge products cannot ensure that the selected target channel is supported by all the APs participating bridged networking, which may result in some secondary APs being unable to connect to the primary AP due to the lack of support for the switched target channels after switching channel, thereby causing the aforementioned secondary APs unable to re-network with the primary AP and reducing the stability of the bridged network. In addition, randomly selecting channel or using fixed channel does not take the current environmental information into account, so it cannot guarantee that wireless bridges with channel switching will have good overall network performance (such as throughput, latency, etc.).

As mentioned above, in wireless bridged network, a primary AP is networked with at least one secondary AP, and the primary and secondary APs are operating on the same channel in working mode. During operation, the environment and topology of the bridged network may change dynamically, for example, significant changes in the environment (such as the primary AP or the secondary AP detects a radar signal on the current operating channel, the primary AP or the secondary AP encounters strong interference on the current operating channel, the interference on at least one channel other than the current operating channel suffered by the primary AP or the secondary AP is reduced a lot), and significant changes in the topology (such as, a new secondary AP is connected to the primary AP to bridge to the network, the secondary AP once bridged to the network is disconnected from the primary AP for a long time, the secondary AP once bridged to the network is reconnected to the primary AP within a short period since disconnecting from the primary AP to re-bridge to the network, the secondary AP once bridged to the network is reconnected to the primary AP after a long period since disconnecting from the primary AP to re-bridge to the network).

These dynamic changes of the environment and topology may bring some problems. For example, when the primary AP or the secondary AP encounters strong interference on the current operating channel, if the wireless bridged network still operates on the current operating channel, it would suffer stronger interference on the current operating channel. Similarly, when the interference on at least one channel other than the current operating channel suffered by the primary AP or the secondary AP is reduced a lot, the wireless bridged network may obtain better performance on the other channel than the current operating channel. Furthermore, according to the regulations of the law, for APs operating on a DFS channel, they should not operate on the channel having radar signals thereon so as to avoid interfere to the radar signals. When the primary AP or the secondary AP detects a radar signal on the current operating DFS channel, if the wireless bridged network maintains operating on the current operating channel, the primary AP or the secondary AP that detects the radar signal will be disconnected from the network owing to immediately channel switching required by regulations. In addition, different APs may have different models and be set to different country codes, which cause them supporting different channels, and thus one or more APs that intend for joining (rejoining) in the network may not be able to operate on the current operating channel and cannot join (rejoin) in the network. Apparently, the dynamic changes of the environment and topology may result in the deteriorated overall network performance (such as decreased throughput, increased latency etc.), decreased connection stability and so on of the wireless bridge. Similar problems are with wireless mesh network. Therefore, in addition to automatic channel switching to comply with regulations, automatic channel switching is also required when there are significant changes in the environment (strong interference encountered by the primary or secondary AP on the current operating channel) or when there are significant changes in the topology.

In sum, existing bridge products only perform automatic channel switching to meet regulations after bridged networking, and do not perform automatic channel switching when there are significant changes in the environment or topology. Moreover, the target switching channel selected by existing bridge products during automatic channel switching is either a randomly selected channel or a pre-set fixed channel. It can be seen that existing bridge products lack a complete automatic channel switching mechanism, which cannot adapt to environmental changes and topology changes, and thus cannot ensure that wireless bridges have good overall network performance and strong connection stability. Therefore, it is necessary to adaptively change the operating channel of the wireless networks based on its environment conditions and topology, i.e., enabling the wireless network adaptively switch the operating channel.

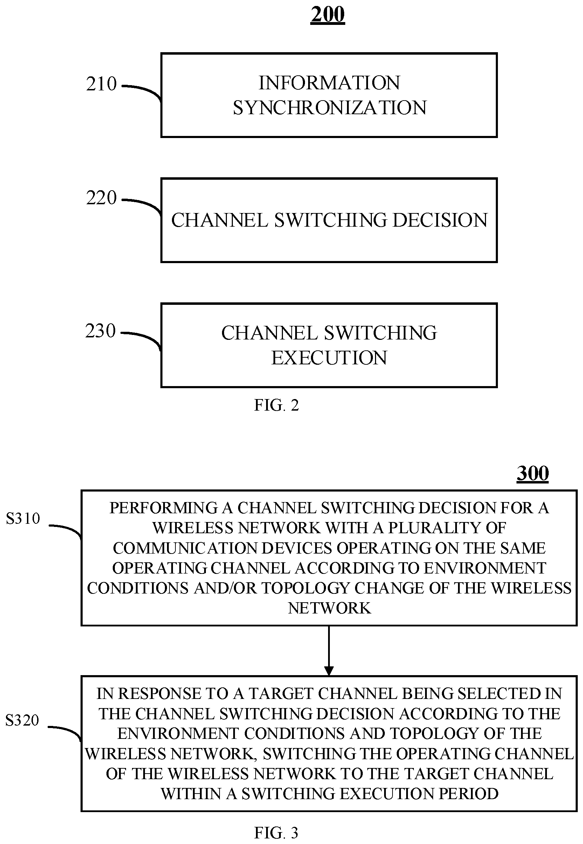

FIG. 2 shows a schematic diagram illustrating an overall architecture of a channel switching mechanism 200 for a wireless network in accordance with an embodiment of the present disclosure. The channel switching mechanism 200 comprises three processes, information synchronization 210, channel switching decision 220 and channel switching execution 230. These three processes are independent to each other, do not have a strict execution order, and can be executed concurrently.

During the process of information synchronization 210, a second AP device (which may be also referred to as secondary AP device, e.g., the AP devices 116-118 in FIG. 1b) may synchronize its information with a first AP device (which also referred to as primary AP device, e.g., the AP device 115 in FIG. 1b). During the process of channel switching decision 220, the first AP device may determine whether an operating channel of the network need to be switched, if so, select a target channel to be switched. Furthermore, during the process of channel switching execution 230, the first AP device may determine the timing of switching the operating channel and perform the switching of the operating channel. The details of these processes will be discussed in the following.

FIG. 3 illustrates a flowchart of an exemplary method 200 for wireless communication implemented at a primary communication device (which may also be referred to as access point (AP) device, e.g., the AP device 115 in FIG. 1b) in accordance with an embodiment of the present disclosure.

The method 300, at step S310, includes performing a channel switching decision for a wireless network with a plurality of communication devices operating on the same operating channel according to environment conditions and/or topology change of the wireless network. The plurality of communication devices may include a first communication device (which also referred to as primary communication device or primary AP device). The method 300 is implemented by the primary communication device. In general, the topology change is self-precepted by the primary communication device, and the environment conditions may include the primary communication device's self-precepted environment conditions and the environment conditions reported by each secondary communication device (which may be also referred to as second communication device, e.g., the AP devices 116-118 and the client devices 124-128 in FIG. 1b). In some embodiments, the environment conditions may include one or more of channel wireless interference, channel availability, or communication load. In some embodiments, the topology change of the wireless network may include one or more of the following scenarios: a second communication device of the plurality of communication devices is disconnected from the first communication device, or a third communication device changes to a state of being joined into the wireless network from a state of being not joined into the wireless network.

The method 300, at step S320, includes in response to a target channel being selected in the channel switching decision in step S310 according to the environment conditions and topology of the wireless network, switching the operating channel of the wireless network to the target channel within a switching execution period. In other words, even if it is determined that it is required to perform channel switching, it does not necessary to switch the operating channel immediately, and it is required to select a target channel and a proper switching timing. It should be noted that switching the operating channel immediately after determining that it requires channel switching is a kind of proper switching timing for one or more specific scenarios. In addition, it should be appreciated that steps S310 and S320 may be independent to each other, that is, steps S310 and S320 do not have a strict execution order and may be executed concurrently.

In some embodiments, the first communication device may perform the channel switching decision according to the environment conditions detected by the first communication device itself, and do not need the information from the second communication device, for example the environment conditions reported by the second communication device.

According to the method 300, the target channel and timing for switching the operating channel can be determined based on environmental information (wireless interference, channel availability, communication load, etc.) and topology change (connecting a secondary communication device to the primary communication device so as to perform bridged networking, disconnecting a secondary communication device having joined into the wireless network from the primary communication device, etc.), so as to adaptively change the operating channel of the wireless network according to environmental changes and topology changes, achieving adaptive channel switching of the wireless network, improving the overall network performance of the wireless network (such as increasing throughput and reducing latency), and enhancing connection stability.

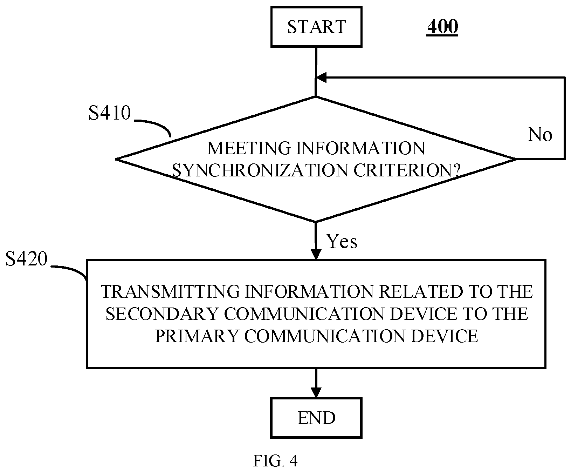

As mentioned above, secondary communication devices may report environment conditions to the primary communication device. FIG. 4 illustrates a flowchart of an exemplary process 400 for synchronizing information between a primary communication device (e.g., the AP device 115 in FIG. 1b) and a secondary communication device (e.g., the AP device 116-118 or the client device 124-128 in FIG. 1b) at process 210 in FIG. 2 in accordance with an embodiment of the present disclosure.

The process 400, at step S410, includes that the secondary communication device determines whether at least one of the information synchronization criteria is met. If no information synchronization criterion is met ("No" in FIG. 4), the process 400 will repeat step S410. If one of the information synchronization criteria is met ("Yes" in FIG. 4), the process 400 will proceed to step S420. In some embodiments, the information synchronization criteria may include, but not limited to, that the synchronization period arrives, the secondary communication device receives an instruction of information synchronization from the primary communication device, or the secondary communication device detects that information related to the secondary communication device has been changed. For the situation that the synchronization period arrives, the secondary communication device would actively perform periodic information synchronization, and the period for information synchronization may be for example 30 seconds. When the secondary communication device receives an instruction of information synchronization from the primary communication device, the secondary communication device would perform information synchronization under the instruction from the primary communication device, for example, the primary communication device would transmit an instruction instructing information synchronization to the secondary communication device when it determines that it is required to determine whether to perform channel switching. The situation in which the secondary communication device detects that information related to the secondary communication device has been changed includes, for example, one or more pieces of information related to the secondary communication device has been changed, and the changes in one or more pieces of information related to the secondary communication device exceed a preset threshold. In some embodiments, the changes in one or more pieces of information related to the secondary communication device may be indicated by the changes in RSSI, RCPI, SNR, SINR, noise floor, packet error rate, retransmission ratio, communication latency, channel utilization, channel load and so on. Herein, the communication load refers to communication flow, representing transmission rate (for example, 100 MBps, 10 MBps and so on), whereas the channel load refers to channel occupancy rate or channel busy level, which may be represented by the ratio of channel occupancy time to total time (for example, 20% indicates that the channel is occupied or utilized 20% of the time).

The process 400, at step S420, includes that the secondary communication device transmits the information related to the secondary communication device to the primary communication device. Accordingly, the primary communication device receives, from the secondary communication device, the information related to the secondary communication device. The information related to the secondary communication device may include, but not limited to, a set of channels supported by the secondary communication device, wireless interference on the operating channel and/or candidate channels (for example, detected by the secondary communication device), channel availability of the operating channel and/or candidate channels, communication load of the secondary communication device, etc. In some embodiments, the communication load of the secondary communication device may refer to communication load of a link between the primary communication device and the secondary communication device. In another embodiment, the communication load of the secondary communication device may refer to communication load of a link between the secondary communication device and any of connected wireless terminals, including client devices, other secondary communication device, etc. In yet another embodiment, the communication load of the secondary communication device may refer to total communication load of links between the secondary communication device and connected wireless terminals, including client devices, other secondary communication device, etc. The set of channels supported by the secondary communication device includes channels on which the secondary communication device can operate normally. The wireless interference may be indicated by one or more of the following representations: strength of the interference signal (such as Received Signal Strength Indicator (RSSI), Received Channel Power Indicator (RCPI) and so on), the difference between the strength of the useful signal and the strength of the interference signal (such as Signal-to-Noise Ratio (SNR), Signal to Interference plus Noise Ratio (SINR) and so on), etc. In addition to the above representations, the wireless interference may also relate to noise floor, packet error rate, retransmission ratio, communication latency, channel utilization, channel load and so on. The channel availability is determined by the local laws and regulations and so on. For example, available channels in different countries or areas may be different, Auto Frequency Coordination (AFC) has some limitations on power of an outdoor equipment in 6G frequency band, which may cause an AP unable to use some channel(s) within 6G frequency band at the current transmission power. Moreover, according to some regulations, different channels support different maximum transmission powers, where the channel with larger maximum transmission power has a higher channel availability level. The communication load may be indicated by one or more of the following representations: the amount of data (for example, the number of packets) transmitted during a period of time, the amount of data (for example, the number of packets) received during a period of time, etc.

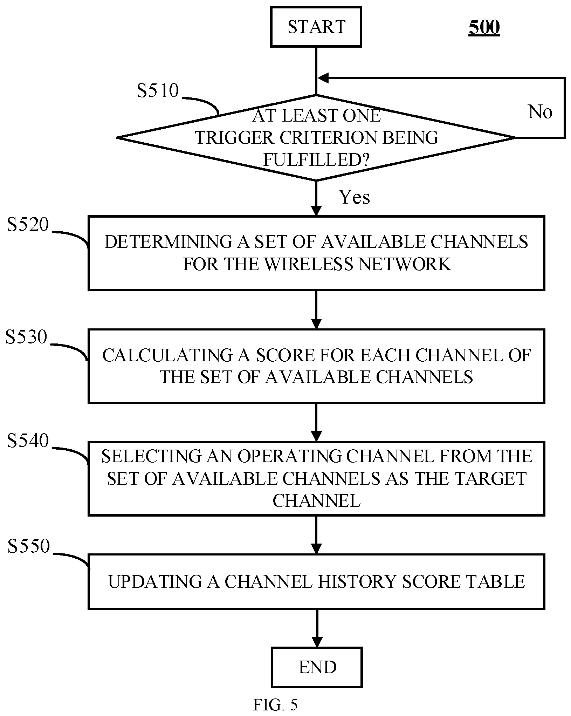

FIG. 5 shows a flowchart illustrating an exemplary process 500 for determining channel switching and a target operating channel at process 220 in FIG. 2 in accordance with some embodiments of the present disclosure. Firstly, at step S510, it is determined whether at least one of switching decision trigger criteria for determining whether the operating channel needs to be switched is fulfilled. If no switching decision trigger criterion is fulfilled ("No" in FIG. 5), the process 500 will repeat step S510. If one switching decision trigger criterion is fulfilled ("Yes" in FIG. 5), the process 500 will proceed to step S520.

In some embodiments, the switching decision trigger criteria for determining whether the operating channel needs to be switched may include, but not limited to, that the first communication device (i.e., the primary AP device, e.g., the AP device 115 in FIG. 1b) detects interference beyond a first interference threshold (i.e., strong interference) on the operating channel of the wireless network, a second communication device (i.e., a secondary communication device, e.g., the AP device 116-118 or the client device 124-128 in FIG. 1b) having joined into the wireless network detects interference beyond a second interference threshold (i.e., strong interference) on the operating channel of the wireless network, the first communication device detects that interference detected on a channel of candidate channels that is other than the operating channel is lower than a third interference threshold (i.e., significant decrease), a second communication device having joined into the wireless network detects that interference detected on a channel of candidate channels that is other than the operating channel is lower than a fourth interference threshold (i.e., significant decrease), the first communication device detects a radar signal on the operating channel that is a dynamic frequency selection (DFS) channel, a second communication device having joined into the wireless network detects a radar signal on the operating channel that is a DFS channel, a third communication device (which may be a secondary communication device) changes to a state of being joined into the wireless network from a state of being not joined into the wireless network, a fourth communication device (which may be a secondary communication device) once joined into the wireless network is reconnected to the first communication device within a first time period (i.e., short time period) since disconnecting from the first communication device so as to rejoin into the wireless network, a fifth communication device (which may be a secondary communication device) is disconnected from the first AP device for a second time period (i.e., long time period), a sixth communication device (which may be a secondary communication device) once joined into the wireless network is reconnected to the first communication device after a third time period (i.e., long time period) since disconnecting from the first communication device so as to rejoin into the wireless network, a period for performing a channel switching decision arrives (corresponding to the period that the first communication device periodically makes a channel switching decision), a channel switching trigger signal is received (e.g., from a user), etc. It can be seen that some of the switching decision trigger criteria for determining whether the operating channel needs to be switched correspond to the environment conditions and the topology change of the wireless network. That is, step S510 may include determining whether the environment conditions and/or the topology change of the wireless network meeting at least one of switching decision trigger criteria for determining whether the operating channel needs to be switched. Moreover, step S510 may include determining whether a period for performing a channel switching decision arrives, or whether a channel switching trigger signal is received.

It should be noted that the first interference threshold, the second interference threshold, the third interference threshold and the fourth interference threshold may be the same interference threshold or different interference thresholds, and the terms "first", "second", "third" and "fourth" do not mean that any interference threshold is larger or smaller than the other interference thresholds. It should also be noted that the first time period, the second time period and the third time period may be the same time threshold or different time thresholds, and the terms "first", "second" and "third" do not mean that any time period is larger or smaller than the other one. The situation that a second communication device changes to a state of being joined into the wireless network from a state of being not joined into the wireless network means that connecting a new secondary communication device to the primary communication device to join into the wireless network.

It should be noted that detecting interference beyond an interference threshold may be determined by one or any combination of the following criteria: the interference signal strengths of multiple consecutive samples are greater than the preset signal strength threshold, the signal-to-noise ratios of multiple consecutive samples are less than the preset signal-to-noise ratio threshold, the interference signal strengths of N out of M samples are greater than the preset signal strength threshold (N<M), and the signal-to-noise ratios of N out of M samples are less than the preset signal-to-noise ratio threshold (N<M), and so on. It should be also noted that detecting interference lower than an interference threshold may be determined by one or any combination of the following criteria: the interference signal strengths of multiple consecutive samples are less than the preset signal strength threshold, the signal-to-noise ratios of multiple consecutive samples are greater than the preset signal-to-noise ratio threshold, the interference signal strengths of N out of M samples are less than the preset signal strength threshold (N<M), and the signal-to-noise ratios of N out of M samples are greater than the preset signal-to-noise ratio threshold (N<M). It should be noted that in addition to the above methods, detecting interference beyond an interference threshold or lower than an interference threshold could by comparing any of the following parameters with a respective threshold: noise floor, packet error rate, retransmission ratio, communication latency, channel utilization, channel load, etc. The larger the value of the parameter, the larger the interference is, and vice versa.

Furthermore, the process 500, at step S520, determining a set of available channels for the wireless network according to sets of channels supported respectively by the plurality of communication devices and a set of blacklist channels. The set of available channels for the wireless network may include channels on which the wireless network can operate normally. Similarly, the sets of channels supported respectively by the plurality of communication devices mean that each communication device supports a set of channels, and the set of channels supported by the communication device includes channels on which this communication device can operate normally. In some embodiments, determining a set of available channels for the wireless network may comprises: performing an intersection operation on a set of channels supported by the first communication device and sets of channels supported respectively by the other communication devices having joined into the wireless network to obtain an intersection set of channels; and excluding any channel belonging to the set of blacklist channels from the obtained intersection set of channels to determine the set of available channels.

In some embodiments, the set of blacklist channels may include one or more of the channels: a DFS channel on which a communication device having joined into the wireless network detects a radar signal, a channel on which an AP device having joined into the wireless network detects interference beyond a fifth interference threshold (i.e., strong interference), or an undesired channel set by a user. It should be noted that, in some embodiments, the set of blacklist channels may do not include the above-mentioned channels. It should be also noted that each channel of the set of blacklist channels has a predetermined aging time, a channel on which neither any radar signal nor interference beyond the fifth interference threshold is detected during its aging time will be removed from the set of blacklist channels. Moreover, different types of channels in the set of blacklist channels may have different aging time, for example, the undesired channel set by a user has an infinite aging time, that is, the undesired channel set by a user cannot be removed from the set of blacklist channels automatically. For example, the undesired channel set by a user can be removed from the set of blacklist channels by the user manually, e.g., via a removing indication.

After determining the set of available channels for the wireless network, the process 500 proceed to step S530. The process 500, at step S530, calculates a score for each channel of the set of available channels according to the environment information of the wireless network and channel availability. The score of each channel of the set of available channels may be based at least on channel interference and maximum transmission powers of the channel. In some embodiments, the score of each channel of the set of available channels embodies and is related to channel interference suffered by each AP device of the plurality of AP device having joined into the wireless network, and channel availability. The score may be evaluated based on the following principle: the smaller the wireless channel interference of the AP device or the higher the channel availability level, the higher the score of the channel, and the better overall network performance the wireless network can obtain by operating on this channel. It should be noted that the method of calculating channel scores corresponding to different switching decision trigger criteria may be the same or different, but in any case, the above principle should be followed.

After calculating a score for each channel of the set of available channels, the process 500 proceed to step S540. The process 500, at step S540, includes selecting a channel from the set of available channels as the target channel based on the calculated score of each channel of the set of available channels and/or previous scores of candidate channels (for example, a channel history score table). In some embodiments, the target channel may be selected according to one selection criterion of the following selection criteria: the target channel has the highest score among the calculated scores of the channels in the set of available channels, or the target channel has the highest score among the previous scores of the candidate channels (for example, the channel history score table), or the target channel has the highest score among the calculated scores of the set of available channels and the previous scores of the candidate channels (for example, the channel history score table). It should be appreciate that in some cases, for example, failure of calculating the scores of the set of available channels, or the calculated scores of the set of available channels at this time being unavailable (e.g., failure of the information synchronization before making channel switching decision, and thus the environment information of the secondary APs being unavailable), if the time of channel switching decision from the last time of triggering channel switching decision is short (and thus the environment can be deemed as not changing significantly), it is reasonable to use the previous scores of the candidate channels to select the target channel. In some situations, e.g., packets carrying the information of a channel are lost during the information synchronization, it may not be possible to calculate the score of this channel, and the channel having the highest score among the previous scores of the candidate channels may be selected as the target channel. The selection of the target channel may not be always successful. If the channel meeting the selection criterion belongs to the set of available channels, i.e., a target channel is selected out, the selection of the target operating channel is successful. The failure of selecting the target operating channel means that no target channel is selected during this channel switching decision for the wireless network, that is, all the channel within the set of available channels do not meet any of the selection criteria. It should also be noted that, in some embodiments, the selection criteria (methods) for selecting the target channel corresponding to different channel switching decision trigger criteria may be different. For example, for the primary AP periodically performing a channel switching decision, it is required that the selected target channel has a score higher than that of the current operating channel by the preset score threshold; for determining to switch operating channel owing to unavailability of the current operating channel, such as detecting a radar signal on the DFS operating channel, the selected target channel may be the channel having the best performance and may have a lower score than the current operating channel. Moreover, in some embodiments, if the channel switching decision is triggered by a user, e.g., via receiving a channel switching trigger signal, the selected target channel should have a higher score than the current operating channel.

In addition, the process 500, at step S550, updating a channel history score table based on the calculated score of each channel of the set of available channels. The channel history score table stores the most recent (e.g., within a preset threshold times) historical scores calculated for each channel of the candidate channels during performing channel switching decisions, and can be used to guide the next or future multiple channel switching decisions.

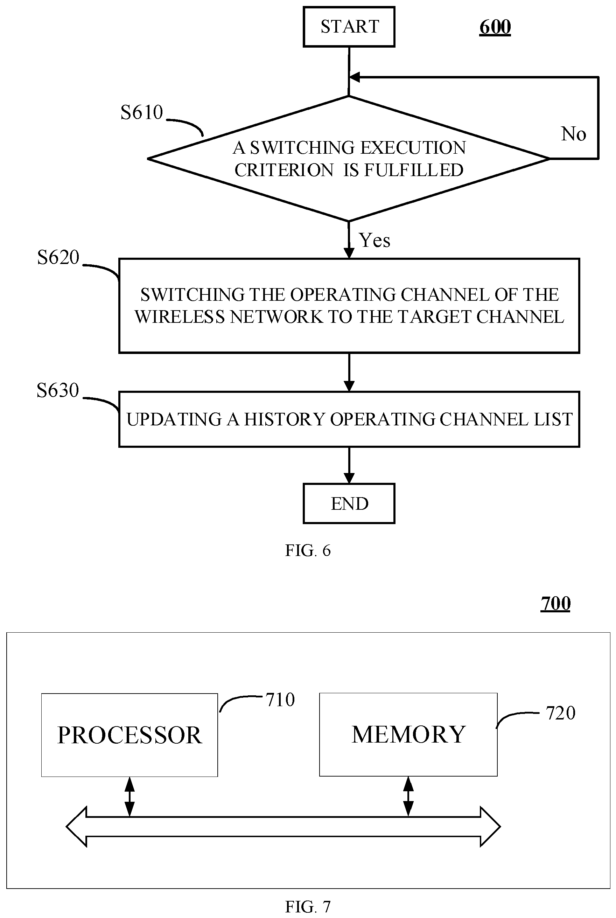

FIG. 6 shows a flowchart illustrating an exemplary process 600 for executing channel switching at step 230 in FIG. 2 in accordance with an embodiment of the present disclosure. Firstly, at step S610, it is determined whether a switching execution criterion for switching the operating channel of the wireless network is fulfilled. If the switching execution criterion is not fulfilled ("No" in FIG. 6), the process 600 will repeat step S610. If the switching execution criterion is fulfilled ("Yes" in FIG. 6), the process 600 will proceed to step S620. In some embodiments, the switching execution period (e.g., the switching execution period mentioned in step S320) starts once a switching execution criterion for switching the operating channel of the wireless network is fulfilled.

In some embodiments, the switching execution criterion for switching the operating channel of the wireless network may include that a target channel is selected, and communication load of the wireless network is lower than a communication load threshold. In some embodiments, the target channel being selected may refer to that the first communication device (i.e., the primary communication device, e.g., the AP device 115 in FIG. 1b) has successfully selected at least one target channel during the previous channel switching decisions. In some embodiments, communication load of the wireless network being lower than a communication load threshold includes that communication load of links between the first communication device and any other communication device (i.e., secondary communication device, e.g., the AP device 116-118 or the client device 124-128 in FIG. 1b) having joined into the wireless network is lower than the communication load threshold (i.e., in low traffic state). In some embodiments, communication load of the wireless network being lower than a communication load threshold includes that communication load of a link between the first communication device and another communication device (i.e., secondary communication device, e.g., the AP device 116-118 or the client device 124-128 in FIG. 1b) having joined into the wireless network is lower than the communication load threshold (i.e., in low traffic state). In some embodiments, communication load of the wireless network being lower than a communication load threshold includes that the total communication load of multiple links between the first communication device and multiple other communication devices (i.e., secondary communication devices, e.g., the AP device 116-118 or the client device 124-128 in FIG. 1b) having joined into the wireless network is lower than the communication load threshold (i.e., in low traffic state).

It should be noted that there are two kinds of target channel, a channel that is not a previous operating channel within a fourth time period (type I) and the channel that is a previous operating channel within the fourth time period (type II). The previous operating channel here may refer to the last operating channel or the operating channel before two switches. The target operating channel of type II means that the channel switched last time is not the optimal channel and was switched owing to certain reasons, and thus the operating channel should be switched back to the optimal channel. One example of the target channel of type II is that the last channel switching is switching from a DFS channel to a non-DFS channel selected by the channel switching decision, and the channel switching at this time is switching from the non-DFS channel to the previous DFS channel.

For the target channel of type I, the switching execution criterion for switching the operating channel of the wireless network may further include that: a time interval between a current time and a time when the target channel was selected is less than a first time threshold. For example, the operating channel of the wireless network has not been switched to the last target operating channel selected during a channel switching decision and a time interval between the current time and the time when the last target operating channel was selected is less than a fourth time threshold (for example, the target operating channel was selected 30 minutes ago but the operating channel has not been switching to the target channel yet).

For the target operating channel of type II, the switching execution criterion for switching the operating channel of the wireless network further include one or more of the following criteria: the switching decision trigger criteria that is fulfilled to select the target channel of the last channel switching belong to a first set of trigger criteria (for example, specific trigger criteria), the last time when the operating channel of the wireless network was switched is more than a second time threshold ago (for example, there is no channel switching over 30 minutes), the plurality of communication devices do not detect any radar signal on the target channel (i.e., the selected history operating channel) at the current time, the plurality of communication devices do not detect any radar signal on the target channel (i.e., the selected history operating channel) for a fifth time period (for example, no radar signal is detected over 30 minutes), the plurality of communication devices do not detect interference beyond a sixth interference threshold (for example, a strong interference) on the target channel at the current time, or the plurality of communication devices do not detect interference beyond a seventh interference threshold on the target channel for a sixth time period (i.e., a long time).

In some embodiments, the first set of trigger criteria may include one or more of the following criteria: the first communication device detects interference beyond a first interference threshold on the operating channel of the wireless network, a second communication device having joined into the wireless network detects interference beyond a second interference threshold on the operating channel of the wireless network, the first communication device detects a radar signal on the operating channel that is a dynamic frequency selection (DFS) channel, or a second communication device having joined into the wireless network detects a radar signal on the operating channel that is a DFS channel.

The process 600, at step S620, switches the operating channel of the wireless network to the target channel. In some embodiments, switching the operating channel of the wireless network to the target channel may comprise that: the first communication device switches to the target channel and the other communication devices of the plurality of communication devices are disconnected from the first communication device firstly, and then the other communication devices connect to the first communication device on the target channel; or the target channel and switching time of the first communication device are informed (e.g., by means of Channel Switch Announcement, CSA) to the other communication devices of the plurality of communication devices firstly, and then the first communication device and the other communication devices switch to the target channel at the same time. The later channel switching manner may be deemed as seamless channel switching, in which the links in the wireless network would not be disconnected, and thus having better performance in channel switching than the former channel switching manner. In the former channel switching manner, in some embodiments, the other communication devices detect the first communication device on the target channel first, and then connect to the first communication device on the target channel (i.e., switch to the target channel).

After switching the operating channel, the process 600, at step S630, updates a history operating channel list based on the target channel after the first AP device has been switched to the target channel. The history operating channel list stores the most recent operating channels and can be used to guide the execution of the next or future multiple channel switching decisions, for example, switching from the current operating channel back to the historical operating channel (such as the last operating channel, the operating channel before two switches), etc.

It should be noted that the switching execution criterion for switching the operating channel of the wireless network depends on the switching decision trigger criterion that is fulfilled to select the target channel, if the switching decision trigger criterion that is fulfilled to select the target channel is different, the switching execution criterion for switching the operating channel corresponding to the selected target channel is different. In some embodiments, if determining a set of available channels for the wireless network is in response to receiving the channel switching trigger signal, the switching execution criterion is unconditional. In other words, if the channel switching decision is triggered by a user, the switching to the target channel is performed immediately (i.e., unconditionally) after selecting the target channel. It should be also noted that determining whether at least one of switching decision trigger criteria for determining whether the operating channel needs to be switched is fulfilled (step S510, i.e., determining whether to trigger performing a channel switching decision) and determining whether the switching execution criterion for switching the operating channel of the wireless network is fulfilled (step S610, i.e., determining whether to perform channel switching) are different determinations. If determining to trigger performing a channel switching decision, it would try to select a target operating channel, but it does not mean that it would necessarily select out a target operating channel or the channel switching would be performed immediately. If determining to perform channel switching, it would trigger the operating channel to switch to the target channel.

In some embodiments, the communication load being lower than a communication load threshold is determined based on one or more of the following criteria: the amount of data (for example, the number of packets) transmitted in a predetermined first period is less than a preset first threshold amount, the amount of data (for example, the number of packets) received in a predetermined second period is less than a preset second threshold amount. In some embodiments, the communication load being lower than a communication load threshold may comprise that communication load of links between the first AP device and any other AP device having joined into the wireless network being lower than the communication load threshold. In some embodiments, the communication load being lower than a communication load threshold may comprise that the total communication load of multiple links between the first AP device and multiple other AP devices having joined into the wireless network being lower than the communication load threshold.

FIG. 7 is an exemplary block diagram illustrating a computing device in accordance with some embodiments of the present disclosure.

It should be noted that the computing device depicted in FIG. 7 can correspond to one or more of the primary communication device and the secondary communication device as described in FIGS. 1-6, and can be used to perform the actions involved in the channel switching mechanism, for example, the mechanism 200, the method 300 and the processes 400-600 as described above.

As shown in FIG. 7, the computing device 700 can comprise processor 710 and memory 720. The processor 710 is communicatively coupled with the memory and configured to perform the methods discussed above.

Examples of the processor 710 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

The processor 710 can execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on memory 720.

The memory 720 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory 720 may reside in the processor 710, external to the processor 710, or distributed across multiple entities including the processor 710. The memory 720 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

In addition, according to another embodiment of the present disclosure, a computer program product for wireless communication is disclosed. As an example, the computer program product comprises a non-transitory computer readable storage medium having program instructions embodied therewith, and the program instructions are executable by a processor. When executed, the program instructions cause the processor to perform one or more of the above-described procedures, and details are omitted herein for conciseness.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

Reference to an element in the singular is not intended to mean "one and only one" unless specifically so stated, but rather "one or more". Similarly, reference to an element in the plural is not intended to mean "more than one" unless specifically so stated or being contradictory with the description elsewhere, but rather "one or more". Terms such as "if", "when", and "while" should be interpreted to mean "under the condition that" rather than implying an immediate temporal relationship or reaction. That is, these phrases, e.g., "when", do not imply an immediate action in response to or during the occurrence of an action, but simply imply that if a condition is met then an action will occur, but without requiring a specific or immediate time constraint for the action to occur. Combinations such as "at least one of A, B, or C", "one or more of A, B, or C", "at least one of A, B, and C", "one or more of A, B, and C", and "A, B, C, or any combination thereof" include any combination of A, B, and/or C, and may include multiples of A, multiples of B, or multiples of C. Specifically, combinations such as "at least one of A, B, or C," "one or more of A, B, or C", "at least one of A, B, and C", "one or more of A, B, and C", and "A, B, C, or any combination thereof" may be A only, B only, C only, A and B, A and C, B and C, or A and B and C, where any such combinations may contain one or more member or members of A, B, or C.

It should be noted that the flowcharts and block diagrams in the attached drawings illustrate the possible architectures, functions and operations of the methods and apparatuses according to various embodiments of the present application. In this regard, each block in the flowchart or block diagram may represent a module, a program segment, or a part of code, which contains at least one executable instruction for implementing a specified logical function. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, may be implemented by a dedicated hardware-based system that performs specified functions or operations, or by a combination of dedicated hardware and computer instructions

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

Throughout the description and claims of this specification, the word "comprise" and variations of the word, such as "comprising" and "comprises", means "including but not limited to", and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

It should be noted that the above-mentioned examples illustrate rather than limit the invention, and that those skilled in the art will be able to design many alternative embodiments without departing from the scope of the appended claims. Any reference signs in the claims shall not be construed so as to limit their scope.

## Claims

1. A method for wireless communication implemented at a communication device, the communication device being a first communication device, the method comprising:
performing a channel switching decision for a wireless network with a plurality of communication devices operating on the same operating channel according to environment conditions and/or topology change of the wireless network, wherein the plurality of communication devices includes the first communication device; and
in response to a target channel being selected in the channel switching decision according to the environment conditions and topology of the wireless network, switching the operating channel of the wireless network to the target channel within a switching execution period.

2. The method of claim 1, wherein performing a channel switching decision comprising:
determining a set of available channels for the wireless network according to sets of channels supported respectively by the plurality of communication devices and a set of blacklist channels in response to one of the following cases: the environment conditions and/or the topology change of the wireless network meet at least one of switching decision trigger criteria for determining whether the operating channel needs to be switched, a period for performing a channel switching decision arrives, or a channel switching trigger signal is received;
calculating a score for each channel of the set of available channels according to the environment information of the wireless network and channel availability of a respective channel; and
selecting a channel from the set of available channels as the target channel based on the calculated score of each channel of the set of available channels and/or previous scores of candidate channels.

3. The method of claim 2, wherein the environment conditions include one or more of channel wireless interference, channel availability, or communication load; and
wherein the topology change of the wireless network includes one or more of the following scenarios:
a second communication device of the plurality of communication devices is disconnected from the first communication device, or
a third communication device changes to a state of being joined into the wireless network from a state of being not joined into the wireless network.

4. The method of claim 2 or 3, wherein the switching decision trigger criteria include:
the first communication device detecting interference beyond a first interference threshold on the operating channel of the wireless network,
a second communication device of the plurality of communication devices detecting interference beyond a second interference threshold on the operating channel of the wireless network,
the first communication device detecting that interference detected on a channel of candidate channels that is other than the operating channel is lower than a third interference threshold,
a second communication device of the plurality of communication devices detecting that interference detected on a channel of the candidate channels that is other than the operating channel is lower than a fourth interference threshold,
the first communication device detecting a radar signal on the operating channel that is a dynamic frequency selection (DFS) channel,
a second communication device of the plurality of communication devices detecting a radar signal on the operating channel that is a DFS channel,
a third communication device changing to a state of being joined into the wireless network from a state of being not joined into the wireless network,
a fourth communication device that once joined into the wireless network being reconnected to the first communication device within a first time period since disconnecting from the first communication device, so as to rejoin into the wireless network,
a fifth communication device of the plurality of communication devices being disconnected from the first communication device for a second time period, or
a sixth communication device that once joined into the wireless network being reconnected to the first communication device after a third time period since disconnecting from the first communication device, so as to rejoin into the wireless network.

5. The method of any of claims 2 to 4, wherein determining a set of available channels for the wireless network comprising:
performing an intersection operation on a set of channels supported by the first communication device and sets of channels supported respectively by the other communication devices of the plurality of communication devices to obtain an intersection set of channels; and
excluding any channel belonging to the set of blacklist channels from the obtained intersection set of channels to determine the set of available channels; and
wherein the set of blacklist channels includes one or more of:
a DFS channel on which a communication device of the plurality of communication devices detects a radar signal,
a channel on which a communication device of the plurality of communication devices detects interference beyond a fifth interference threshold, or
an undesired channel set by a user,
wherein a channel on which neither any radar signal nor interference beyond the fifth interference threshold is detected during its aging time will be removed from the set of blacklist channels.

6. The method of any of claims 2 to 5, wherein the score of each channel of the set of available channels is based at least on channel interference and maximum transmission powers of the respective channel.

7. The method of any of claims 2 to 6, wherein the target channel is selected according to a selection criterion of the following selection criteria:
the target channel has the highest score among the calculated scores of channels in the set of available channels,
the target channel has the highest score among the previous scores of the candidate channels, or
the target channel has the highest score among the calculated scores of the channels in the set of available channels and the previous scores of the candidate channels.

8. The method of any of claims 1 to 7, wherein the switching execution period starts once a switching execution criterion for switching the operating channel of the wireless network is fulfilled, the switching execution criterion comprises communication load of the wireless network being lower than a communication load threshold.

9. The method of claim 8, wherein if the target channel is not a previous operating channel within a fourth time period, the switching execution criterion further comprises:
a time interval between a current time and a time when the target channel was selected being less than a first time threshold; and
wherein if the target operating channel is a previous operating channel within a fourth time period, the switching execution criterion further comprises one or more of the following criteria:
the switching decision trigger criterion that is fulfilled to select the target channel belongs to a first set of trigger criteria,
the time when the operating channel of the wireless network was last switched is more than a second time threshold ago,
the plurality of communication devices do not detect any radar signal on the target channel at the current time,
the plurality of communication devices do not detect any radar signal on the target channel for a fifth time period,
the plurality of communication devices do not detect interference beyond a sixth interference threshold on the target channel at the current time, or
the plurality of communication devices do not detect interference beyond a seventh interference threshold on the target channel for a sixth time period.

10. The method of claim 9, wherein the first set of trigger criteria include one or more of the following criteria:
the first communication device detects interference beyond a first interference threshold on the operating channel of the wireless network,
a second communication device of the plurality of communication devices detects interference beyond a second interference threshold on the operating channel of the wireless network,
the first communication device detects a radar signal on the operating channel that is a dynamic frequency selection (DFS) channel, or
a second communication device of the plurality of communication devices detects a radar signal on the operating channel that is a DFS channel.

11. The method of any of claims 1 to 10, wherein switching the operating channel of the wireless network to the target channel comprises:
the first communication device switches to the target channel and the other communication devices of the plurality of communication devices are disconnected from the first communication device firstly, and then the other communication devices connect to the first communication device on the target channel; or
the target channel and switching time of the first communication device are informed to the other communication devices of the plurality of communication devices firstly, and then the first communication device and the other communication devices switch to the target channel at the same time.

12. The method of claim 8, wherein the switching execution criterion depends on a switching decision trigger criterion that is fulfilled to select the target channel;
wherein if determining a set of available channels for the wireless network is in response to receiving a channel switching trigger signal, the switching execution criterion is unconditional; and
wherein the communication load being lower than a communication load threshold is determined based on one or more of the following criteria:
the amount of data transmitted in a predetermined first period is less than a preset first threshold amount, or
the amount of data received in a predetermined second period is less than a preset second threshold amount.

13. The method of any of claims 1 to 12, wherein the set of computer program instructions stored in the memory, when executed by at least one of the one or more processors, cause the first communication device to perform operations of:
receiving, from a second communication device of the plurality of communication devices, information related to the second communication device including one or more of: a set of channels supported by the second communication device, wireless interference on the operating channel and/or candidate channels, channel availability of the operating channel and/or candidate channels, or communication load related to the second communication device; and
wherein the information related to the second communication device is transmitted in response to meeting at least one of the following information synchronization criteria:
the synchronization period arrives,
the second communication device receives an instruction of information synchronization from the first communication device, or
the second communication device detects that information related to the second communication device has been changed.

14. A communication device, comprising:
one or more processors;
a memory coupled to at least one of the one or more processors; and
a set of computer program instructions stored in the memory, which, when executed by at least one of the one or more processors, cause the communication device to perform the method of any of claims 1 to 13.

15. A computer program product for wireless communication, the computer program product comprising a non-transitory computer readable storage medium having program instructions embodied therewith, the program instructions executable by a processor of a communication device to cause the communication device to perform the method of any of claims 1 to 13.
